# EUROPÄISCHE PATENTSCHRIFT

(11) **EP 0 579 125 B1**
(45) Veröffentlichungstag und Bekanntmachung des Hinweises auf die Patenterteilung: **18.10.1995**
(21) Anmeldenummer: 93110980.5
(22) Anmeldetag: 09.07.1993
(51) Int. Cl.: F16L 5/02, H02G 3/06

(54) **Verschraubung aus Kunststoff zur Ein- und Durchführung, Abdichtung und Zugentlastung von Kabeln, Leitungen oder Schläuchen**
Plastic screw fitting for entry and extension, sealing and strain relief of cables, ducts or hoses
Raccord à vis en matière plastique pour entrée et traversée de paroi, étanchéité et décharge de traction de câbles, conduits ou tuyaux souples

(30) Priorität: 17.07.1992 DE 4223514
(43) Veröffentlichungstag der Anmeldung: 19.01.1994
(73) Patentinhaber: Hermann Kleinhuis GmbH. & Co. KG, D-58507 Lüdenscheid (DE)
(72) Erfinder: Henniger, Dieter, D-58579 Schalksmühle (DE)
(74) Vertreter: Buse, Karl Georg, Dipl.-Phys.

(56) Entgegenhaltungen:
- DE-A- 3 535 595
- DE-C- 4 011 024
- DE-U- 9 011 248
- FR-A- 2 583 497
- GB-A- 2 013 420

## Beschreibung

Die Erfindung bezieht sich auf eine Verschraubung aus Kunststoff zur Ein- und Durchführung, Abdichtung und Zugentlastung von Kabeln, Leitungen oder Schläuchen, bestehend aus einem Zwischenstutzen mit zugeordnetem Dichtungskörper und einer Hutmutter bzw. einer Druckschraube, wobei der hohlzylindrische Zwischenstutzen einerends durch Schlitze voneinander getrennte Zungen aufweist, welche bei Betätigen der Hutmutter den Dichtungskörper gegen die Umfangsfläche des eingeführten Kabels od.dgl. pressen und sich an die Enden der Zungen das Aufnahmegewinde für die Hutmutter anschließt und der anderenends ein Außengewinde zum Einschreiben in ein Gegengewinde einer Wand aufweist und wobei zwischen dem Aufnahmegewinde für die Hutmutter und dem Außengewinde zum Anbringen des Zwischenstutzens an der Wand ein Bund angeordnet ist, dessen eine Stirnfläche sich an die benachbarte Oberfläche der Wand anlegt.

Solche Verschraubungen sind in mannigfachen Ausführungsformen bekannt. So ist beispielsweise in der DE 35 35 595 C2 eine Verschraubung der eingangs näher gekennzeichneten Art bekanntgeworden, bei der die Breite der Zungen des Zwischenstutzens vom Fuß der Zunge in Richtung auf das freie Ende hin abnimmt. Dabei weisen einige der Zungen an ihrem freien Ende einen quer zu ihrer Längserstreckung verlaufenden Klemmbereich auf dessen Längenabmessungen die Breite der Zunge am freien Ende übersteigt.

Bei diesen bekannten Verschraubungen ist einmal die Ausbildung der Zungen und deren Zusammenwirken mit der Hutmutter bzw. der Druckschraube für die Abdichtung von Bedeutung, denn beim Betätigen der Hutmutter soll unter Zwischenschaltung der Zungen der Dichtungskörper gegen die Umfangsfläche des eingeführten Kabels gepreßt werden, um in diesem Bereich eine gute einwandfreie Dichtung zu erzielen.

Ein anderes Problem der Abdichtung bei derartigen Verschraubungen liegt im Bereich der vorderen Stirnfläche des Bundes des Zwischenstutzens und der benachbarten Oberfläche der Wand, in welche die Verschraubung eingeschraubt werden soll. An sich könnte man daran denken, in diesem Bereich einen Dichtungsring einzusetzen. Hierdurch ließe sich eine ordnungsgemäße Abdichtung zwischen der Verschraubung und der Wand erzielen. Jedoch wird dieses Ziel mit der Verwendung eines zusätzlichen Dichtungskörpers, nämlich eines Dichtungsringes, erkauft. Hierdurch wird nicht nur die Herstellung sondern auch die Montage erschwert. Hinzu kommt, daß ein solcher Dichtungskörper verlorengehen kann.

Wenn bei den bisher bekannten Ausführungsformen dieser Verschraubung aus Kunststoff die vordere Stirnfläche des Bundes des Zwischenstutzens direkt an der benachbarten Oberfläche der Wand anliegt, so ist eine einwandfreie Dichtung nicht gewährleistet. Denn die Praxis zeigt, daß selbst dann, wenn die vordere Stirnfläche des Bundes nachbearbeitet wird, eine ordnungsgemäße Abdichtung mit der zu fordernden Sicherheit nicht erreicht wird.

Hier setzt die Erfindung ein. Sie will einerseits die Verwendung einer zusätzlichen Dichtung, insbesondere eines Dichtungsringes vermeiden, zum anderen aber den Bund des Zwischenstutzens so gestalten, daß dieser bei seinem bestimmungsgemäßen Anlegen an der benachbarten Oberfläche der Wand dort eine gute einwandfreie Dichtung ergibt.

Demgemäß liegt der Erfindung die Aufgabe zugrunde, Verschraubungen aus Kunststoff zur Ein- und Durchführung, Abdichtung und Zugentlastung von Kabeln, Leitungen oder Schläuchen der eingangs gekennzeichneten Art weiter zu verbessern, insbesondere derart, daß der Bund so gestaltet wird, daß bei seinem Zusammenwirken mit der benachbarten Wand, an der die Verschraubung angebracht werden soll, eine ordnungsgemäße Abdichtung erzielt wird.

Erfindungsgemäß ist diese Aufgabe dadurch gelöst, daß der Bund des Zwischenstutzens aus einem formstabilen oberen Bundteil und einem bereichsweise elastischen unteren Bundteil besteht, dessen Stirnfläche sich unmittelbar dichtend an die benachbarte Oberfläche der Wand anlegt.

Bei der bevorzugten Ausführungsform der Erfindung ist vorgesehen, zwischen dem oberen Bundteil und dem unteren Bundteil eine vorzugsweise umlaufende Nut anzuordnen.

Durchgeführte Versuche haben ergeben, daß durch diese Gestaltung des Bundes des Zwischenstutzens zwischen dessen vorderer Stirnfläche und der benachbarten Oberfläche der Wand eine ausgezeichnete Abdichtung erfolgt. Dies ist darauf zurückzuführen, daß der untere Bundteil mindestens bereichsweise elastisch ausgebildet wird, so daß beim Anbringen des Zwischenstutzens die Stirnfläche des Bundes fest und damit dichtend gegen die benachbarte Oberfläche der Wand gepreßt werden kann. Der obere formstabile Bundteil kann dabei nach wie vor zum Ansetzen eines Werkzeuges benutzt werden. Die Abdichtung des Zwischenstutzens in dem genannten Bereich ist somit ohne Verwendung eines zusätzlichen Dichtringes erreicht, sondern nur durch eine neuartige Gestaltung des Bundes des Zwischenstutzens.

Es empfiehlt sich, daß die Nut in einen abgerundeten Nutgrund ausläuft.

Dabei ist ferner vorgesehen, daß die Nut vom Nutengrund ausgehende, schräg auseinanderlaufende Begrenzungswände aufweist, welche bis zur vorderen Öffnung der Nut durchlaufen.

Durchgeführte Versuche haben ergeben, daß es vorteilhaft ist, wenn die Stirnflächen des unteren Bundteiles eine nach vorn hin offene Ausnehmung aufweist.

Dabei kann diese Ausnehmung im unteren Bundteil als konzentrisch zum Durchgang des hohlzylindrischen Zwischenstutzens angeordnete, kreisringförmige Vertiefung der Stirn- bzw. Dichtfläche ausgebildet sein.

Es empfiehlt sich, diese kreisringförmige Vertiefung nur einen Teilbereich der Stirnfläche bzw. Dichtfläche des unteren Bundteiles einnehmen zu lassen und sich an diese Vertiefung ein vorspringender ebener Außenbereich anschließt. Dieser ebene Außenbereich liegt räumlich vor dem Grund der Vertiefung bzw. Ausnehmung.

Es ist ferner vorgesehen, die Dicke des oberen Bundteiles ein Mehrfaches der Dicke des unteren Bundteiles betragen zu lassen. Auf diese Weise kann mit einfachen Mitteln einmal für eine Formstabilität des oberen Bundteiles und zum anderen für federnde Eigenschaften des unteren Bundteiles gesorgt werden.

Um auch eine einwandfreie Abdichtung im Bereich der Zungen des Zwischenstutzens zu erzielen, wird bevorzugt, jede Zunge des Zwischenstutzens einen Klemmbereich aufweisen zu lassen, derart, daß die Klemmbereiche der Zungen des Zwischenstutzens an dieser einseitig in die gleiche Richtung zeigend angeordnet sind und daß jede Zunge in ihrer Ruhelage mit ihrem Klemmbereich die jeweils benachbarte Zunge wenigstens bereichsweise überlappt. Durch eine solche Anordnung ergeben sich - wie durchgeführte Versuche ergeben haben - hervorragende Abdichtungs- und Klemmeigenschaften der Kabelverschraubung im Zusammenwirken mit den Leitungen, Kabeln, Rohren od.dgl.

In der Zeichnung ist die Erfindung in einem Ausführungsbeispiel dargestellt und zwar zeigen:
- Fig. 1: in explosionsartiger Darstellung die erfindungsgemäße Verschraubung (Kabelverschraubung) sowie eine Wand mit einem Durchbruch, dessen Begrenzungswand ein Gewinde aufweist, in welches das Außengewinde eines Zwischenstutzens der Kabelverschraubung eingeschraubt werden soll, dabei ist die Wand teilweise weggeschnitten,
- Fig. 2: im vergrößerten Maßstab, teilweise in Ansicht und teilweise geschnitten, die erfindungsgemäße Verschraubung nach ihrem Einsetzen in den Durchbruch in einer Wand bei fehlender Hutmutter bzw. Druckschraube und
- Fig. 3: in nochmals vergrößerter Darstellung die Teilansicht gemäß dem Ausschnitt III der Fig. 2, teilweise weggebrochen.

Der dem Ausführungsbeispiel zugrundegelegte Verschraubungs-Zwischenstutzen ist einstückig aus einem Kunststoff hergestellt. Eine komplette Kabelverschraubung dient zur Ein- und Durchführung, aber auch zur Abdichtung und Zugentlastung von Kabeln, Leitungen, Schläuchen, Rohren od.dgl. Eine solche Kabelverschraubung besteht aus einem Zwischenstutzen mit dem zugeordneten Dichtungskörper und einer Hutmutter bzw. einer Druckschraube. Dabei sind diesen Teilen Mittel zugeordnet, um die Hutmutter unter Zwischenschaltung des Dichtungskörpers mit dem Zwischenstutzen lösbar zu verbinden. Darüber hinaus ist der Zwischenstutzen ebenfalls mit Verbindungsmitteln versehen, die sein Befestigen an einem Träger, wie einer Wand, zulassen. In den Figuren der Zeichnungen ist auf die Darstellung der mit der Kabelverschraubung zusammenwirkenden Teile, wie Kabel, Leitungen, Schläuche od. dgl. verzichtet. Es können hierbei die in der einschlägigen Praxis üblichen Ausführungsformen dieser Gegenstände benutzt werden.

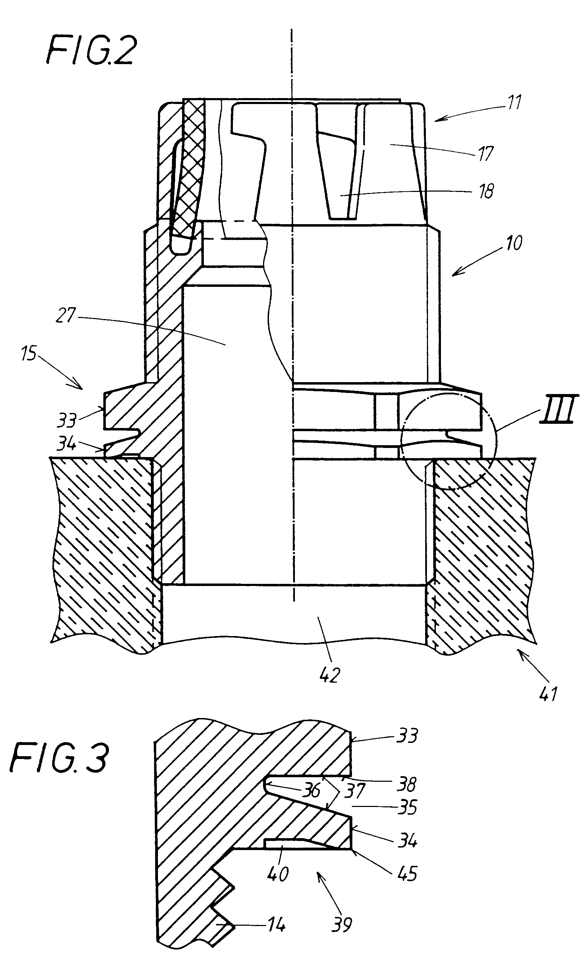

Der dem Ausführungsbeispiel zugrundeliegende Zwischenstutzen ist generell mit 1o bezeichnet und einstückig aus einem der in der Elektroindustrie gebräuchlichen Kunststoffe hergestellt. Der Zwischenstutzen 1o wird von einem mittleren Durchgang 27 durchsetzt, der - wie die Fig. 2 am besten veranschaulicht - nicht überall den gleichen Durchmesser aufweist. Vielmehr ist ein nicht näher bezeichneter schulterförmiger Absatz vorgesehen, an den sich die eine Stirnfläche eines Dichtungskörpers 11 abstützt.

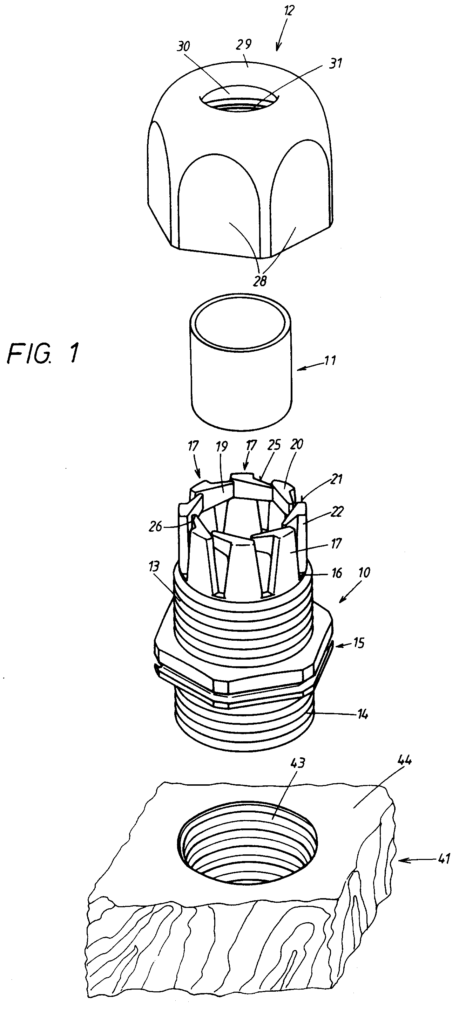

Der Zwischenstutzen 1o hat ein Aufnahmegewinde 13 und ein Außengewinde 14, die durch einen generell mit 15 bezeichneten Bund, beispielsweise durch einen Sechskantbund , voneinander getrennt sind. Das Außengewinde 14 dient dabei dem Zusammenwirken eines Gegengewindes in einer Wand 41. Dadurch wird die Möglichkeit geschaffen, den Zwischenstutzen 1o und damit die gesamte Kabelverschraubung an dieser Wand 41 festzulegen. Das Aufnahmegewinde 13, welches oberhalb des Bundes 15 angeordnet ist, wirkt demgegenüber mit dem Innengewinde 31 einer Überwurfmutter 12 zusammen. Wie die Fig. 1 der Zeichnung am besten erkennen läßt, ist die Überwurfmutter 12 in ihrem unteren Bereich als Sechskant 28 ausgebildet. Die obere Stirnfläche der Überwurfmutter 12 ist mit 29 gekennzeichnet und abgerundet. In der Mitte der Stirnfläche 29 liegend ist eine Einführungsöffnung 3o von kreisrundem Querschnitt vorgesehen, durch die ein Kabel, ein Rohr od.dgl. hindurchgreifen kann. Die sechskantige Ausbildung 28 der Überwurfmutter 12 hat den Vorteil, daß dadurch der Angriff eines Werkzeuges erleichtert wird. Das Außengewinde 13 des Zwischenstutzens 1o und das dazugehörige Innengewinde 31 der Überwurfmutter 12 kann eine bekannte Ausbildung haben. Beispielsweise kann es als Pg-Gewinde ausgebildet sein. Daneben ist aber auch noch die Gestaltung als Sägegewinde denkbar. Letztere Ausführungsform wird z.B. dann benutzt, wenn es um die Verbesserung der Aufnahme von Axialkräften geht.

Wie insbesondere aus der Fig. 1 der Zeichnungen ersichtlich, hat das Außengewinde 13 des Zwischenstutzens 1o eine Stirnfläche 16. An diese Stirnfläche 16 des Aufnahmegewindes 13 des Zwischenstutzens 1o schließen sich generell mit 17 bezeichnete Zungen an. Im gewählten Ausführungsbeispiel sind insgesamt acht solcher Zungen 17 vorhanden, die alle untereinander gleichgestaltet sind. Zwischen zwei benachbarten Zungen 17 ist jeweils ein Schlitz 18 angeordnet.

Aus den Fig. 1 und 2 der Zeichnungen ergibt sich, daß die Breite der Zungen 17 von ihrem Fuß in Richtung auf das freie Ende hin abnimmt. Dadurch erhalten auch die zwischen zwei Zungen 17 liegenden Schlitze 18 eine in Draufsicht gesehen keilförmige Gestalt. Die kleinste Breite jedes Schlitzes 18 ist dabei der Stirnfläche 16 des Außengewindes 13 des Zwischenstutzens 1o benachbart.

Wie die Fig. 1 der Zeichnung am besten erkennen läßt, weist jede Zunge 17 des Zwischenstutzens 1o einen Klemmbereich 19 auf. Die Klemmbereiche 19 aller Zungen 17 ein und desselben Zwischenstutzens 1o sind an dieser einseitig in die gleiche Richtung zeigend angeordnet. Ferner überlappt jede Zunge 17 in ihrer Ruhelage mit ihrem Klemmbereich 19 die jeweils benachbarte Zunge 17 wenigstens bereichsweise.

In dem dargestellten Ausführungsbeispiel ist vorgesehen, daß die Klemmbereiche 19 aller Zungen 17 des Zwischenstutzens 1o in Festdrehrichtung der Überwurfmutter 12 liegen.

Darüber hinaus ist vorgesehen, daß die inneren Begrenzungsflächen der Klemmbereiche 19 aller Zungen 17 des Zwischenstutzens 1o einen Kreis begrenzen.

Die in Festdrehrichtung der Überwurfmutter 12 vordere Begrenzungswand 22 jeder Zunge 17 springt gegenüber der vorderen Partie des Klemmbereiches 19 zurück.

Die innere und die äußere Begrenzungsfläche 25 der vorderen Partie des Klemmbereiches 19 jeder Zunge 17 verlaufen geneigt zueinander. Die genannten Begrenzungsflächen münden jeweils in eine Spitze 26 ein. Diese Spitze 26 und die sich daran anschließende vordere Partie des Klemmbereiches 19 überlappen sich jeweils mit der benachbarten Klemmfläche 19 einer weiteren Zunge.

Im dargestellten Ausführungsbeispiel ist vorgesehen, daß die Oberfläche 2o der Zunge 17 absatzlos in die Oberfläche des Klemmbereiches 19 übergeht. Daher liegen die Oberflächen der Zungen und die Oberfläche der Klemmfläche 19 in ein und derselben Ebene.

Aus den Fig. 1 und 2 der Zeichnungen ist ersichtlich, daß die Zungen 17 des Zwischenstückes 1o in Draufsicht gesehen keilförmig gestaltet sind. Dabei ist die hintere Begrenzungswand der Zunge 17 jeweils mit 21, die vordere Begrenzungswand der gleichen Zunge dagegen mit 22 bezeichnet. Die Ausdrücke "vorne" und "hinten" beziehen sich jeweils auf die Festdrehrichtung der Überwurfmutter 12.

Im dargestellten Ausführungsbeispiel der Zeichnungen sind insgesamt acht Zungen 17 einem Zwischenstutzen 1o zugeordnet. Die Zungen 17 sind dabei alle untereinander gleichgestaltet und in regelmäßiger Anordnung an der Stirnfläche 16 des Außengewindes 13 des Zwischenstutzens 1o angeordnet. Ferner sind die Klemmbereiche 19 aller Zungen 17 des Zwischenstutzens 1o ebenfalls untereinander gleichgestaltet. Die Höhen der Klemmbereiche 19 der Zungen 17 sind dabei wesentlich kürzer gehalten als die Länge der Zungen 17, wie sich aus der Fig. 1 der Zeichnung ergibt.

Wie erwähnt, gehört zu der Kabelverschraubung auch ein Dichtungskörper 11. Dieser wirkt in der in Fig. 2 dargestellten Weise mit dem Zwischenstutzen 1o bzw. den daran angeordneten Zungen 17 mit den Klemmbereichen 19 zusammen. Im Ausführungsbeispiel nach den Fig. 1 und 2 der Zeichnung ist der Dichtungskörper 11 als zylindrischer Hohlkörper ausgebildet, der aus einem gummielastischen Werkstoff in bekannter Weise gefertigt ist. Seine Lage innerhalb des Zwischenstutzens ist in der Fig. 2 wiedergegeben. Dies bedeutet, daß der Dichtungskörper 11 nur so weit in den Zwischenstutzen eingeschoben werden kann, bis er auf einer nicht näher bezeichneten Schulter zur Anlage kommt. In dieser Lage ragt der obere Teil des Dichtungskörpers 11 über die Zungen 17 hinaus.

Gemäß der Fig. 1 der Zeichnung ist die Uberwurfmutter 12 noch nicht mit dem Zwischenstutzen 1o verbunden. Dieses Anbringen dar Überwurfmutter 12 am Zwischenstutzen 1o geschieht, nachdem ein Kabel oder eine Leitung in die Kabelverschraubung eingeführt bzw. durchgeführt ist. Durch das Anbringen der Überwurfmutter 12 am Zwischenstutzen 1o werden die Zungen 17 nach innen in Richtung auf die Umfangsfläche des Dichtungskörpers 11 und damit des Kabels od.dgl. gedrückt. Dabei kommen die Klemmbereiche 19 der Zungen 17 mit der Umfangsfläche des Dichtungskörpers 11 in Wirkverbindung. Auf diese Weise wird ein ordnungsgemäßes Abdichten des Kabels erreicht, zugleich auch die gewünschte Entlastung des Kabels gegen Herausziehen (Zugentlastung). Es erfolgt ein automatisches Anpassen der Lage der Zungen 17 und deren Klemmbereiche 19 an den Durchmesser des abzudichtenden bzw. des festzuhaltenden Kabels. Dabei ist von Vorteil, daß eine verhältnismäßig große Klemmbereichsfläche vorhanden ist. Diese Klemmfläche ergibt sich aus der Summe der Einzelflächen der Klemmbereiche 19 der Zungen 17. Die nach oben hin verbreiterten Schlitze 18 geben den Zungen 17 eine große seitliche Bewegungsmöglichkeit. Da die Klemmbereiche 19 in Richtung auf das Innere den Zungen 17 vorgelagert sind, stören sie die Seitenbewegung der Zungen 17 nicht.

Aus den Fig. 2 und 3 der Zeichnungen ist ersichtlich, daß erfindungsgemäß der Bund 15 des Zwischenstutzens 1o aus einem formstabilen oberen Bundteil 33 und einem mindestens bereichsweise elastischen unteren Bundteil 34 besteht, dessen Stirnfläche 39 sich unmittelbar dichtend an die benachbarte Oberfläche 44 der Wand 41 anlegt.

Im gewählten Ausführungsbeispiel ist zwischen dem oberen Bundteil 33 und dem unteren Bundteil 34 eine umlaufende Nut 35 angeordnet. Die Fig. 3 läßt erkennen, daß diese Nut 35 in einen abgerundeten Nutengrund 36 ausläuft.

Von diesem Nutengrund 36 ausgehend hat die Nut 35 schräg auseinanderlaufende Begrenzungswände 37, die bis zur vorderen Öffnung der Nut 35 durchlaufen. Die Fig. 2 läßt ferner erkennen, daß die Dicke des oberen Bundteiles 33 ein Mehrfaches der Dicke des unteren Bundteiles 34 beträgt. Auf diese Weise wird mit einfachsten Mitteln erreicht, daß der untere Bundteil 34 elastisch nachgiebig ist, was sich in bezug auf die Dichtungseigenschaften vorteilhaft bemerkbar macht, wenn sich - wie in der Fig. 2 dargestellt - die vordere Stirn- oder Dichtungsfläche 39 des Bundes 15 gegen die benachbarte Oberfläche 44 der Wand 41 anlegt.

Die Fig. 1 zeigt, daß beide Bundteile 33 und 35 als Sechskant gestaltet sind.

Die Stirnfläche 39 des unteren Bundteiles 35 weist eine nach vorn hin offene Ausnehmung 4o auf (Fig. 3).

Im dargestellten Ausführungsbeispiel ist diese Ausnehmung 4o im unteren Bundteil 35 als konzentrisch zum Durchgang 27 des hohlzylindrischen Zwischenstutzens 1o angeordnete kreisringförmige Vertiefung der Stirn- bzw. Dichtfläche 39 ausgebildet. Im gezeigten Ausführungsbeispiel nimmt die Vertiefung 4o nur einen Teilbereich dieser Stirn- bzw. Dichtfläche 39 ein. Der restliche Teil der Stirnfläche ist als ebener vorspringender Außenbereich 45 ausgebildet. Dieser Außenbereich 45 hat eine sechskantförmige Gestalt, die konzentrisch zur Längsachse des Zwischenstutzens liegt.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt insbesondere für die Ausbildung und Gestalt des oberen bzw. unteren Bundteiles 33 bzw. 34. Sowohl die Dicke dieser beiden Bundteile als auch die Draufsichtsfläche können abweichend vom dargestellten Ausführungsbeispiel gewählt werden. Dies gilt auch für die Ausbildung und Gestalt der Nut 35 zwischen dem oberen und dem unteren Bundteil. Die Begrenzungswandungen der Nut können anders als dargestellt ausgebildet werden. Und schließlich ist es möglich, die Erfindung auch bei anderen als der dargestellten Kabelverschraubung anzuwenden, beispielsweise bei einer Verschraubung nach DE 35 35 595 C2.

### Bezugszeichenliste :

- 1o -: Zwischenstutzen
- 11 -: Dichtungskörper
- 12 -: Überwurfmutter
- 13 -: Aufnahmegewinde (für 12)
- 14 -: Außengewinde (an 1o)
- 15 -: Bund
- 16 -: Stirnfläche
- 17 -: Zunge
- 18 -: Schlitz (zwischen 17)
- 19 -: Klemmbereich (von 17)
- 2o -: Oberfläche (von 17)
- 21 -: hintere Begrenzungswand (von 17)
- 22 -: vordere Begrenzungswand (von 17)
- 25 -: äußere Begrenzungsfläche (von 19)
- 26 -: Spitze
- 27 -: Durchgang (von 1o)
- 28 -: Sechskant (von 12)
- 39 -: Stirnfläche (von 12)
- 3o -: Einführungsöffnung (von 12)
- 31 -: Innengewinde (von 12)
- 33 -: oberer Bundteil (von 15)
- 34 -: unterer Bundteil (von 15)
- 35 -: Nut (zwischen 33 und 34)
- 36 -: Grund (von 35)
- 37 -: schräge Begrenzungswand (von 35)
- 38 -: gerade Begrenzungswand (von 35)
- 39 -: Stirn- oder Dichtungsfläche (von 15)
- 4o -: Ausnehmung (in 39)
- 41 -: Wand
- 42 -: Durchbruch (in 41)
- 43 -: Gewinde (von 42)
- 44 -: Oberfläche (von 41)
- 45 -: Außenbereich (von 39)

## Patentansprüche

1. Verschraubung aus Kunststoff zur Ein- und Durchführung, Abdichtung und Zugentlastung von Kabeln, Leitungen oder Schläuchen, bestehend aus einem Zwischenstutzen (10) mit zugeordnetem Dichtungskörper (11) aus einem gummielastischen Werkstoff und einer Hutmutter bzw. einer Druckschraube (12), wobei der hohlzylindrische Zwischenstutzen (10) einerends durch Schlitze (18) voneinander getrennte Zungen (17) aufweist, welche beim Betätigen der Hutmutter den Dichtungskörper (12) gegen die Umfangsfläche des eingeführten Kabels od.dgl. pressen, und sich an die Enden der Zungen (17) das Aufnahmegewinde (13) für die Hutmutter (12) anschließt und der anderenends ein Außengewinde (14) zum Einschrauben in ein Gegengewinde einer Wand (41) aufweist und wobei zwischen dem Aufnahmegewinde (13) für die Hutmutter (12) und dem Außengewinde (14) zum Anbringen des Zwischenstutzens (10) an der Wand (41) ein Bund (15) angeordnet ist, dessen eine Stirnfläche sich an die benachbarte Oberfläche der Wand (41) anlegt,
**dadurch gekennzeichnet,**
daß der Bund (15) des Zwischenstutzens (1o) aus einem formstabilen oberen Bundteil (33) und einem bereichsweise elastischen unteren Fundteil (34) besteht, dessen Stirnfläche (39) sich unmittelbar dichtend an die benachbarte Oberfläche (44) der Wand (41) anlegt.

2. Verschraubung nach Anspruch 1, dadurch gekennzeichnet, daß zwischen dem oberen Bundteil (33) und dem unteren Bundteil (34) eine vorzugsweise umlaufende Nut (35) angeordnet ist.

3. Verschraubung nach Anspruch 1, dadurch gekennzeichnet, daß die Nut (35) in einen abgerundeten Nutengrund (36) ausläuft.

4. Verschraubung nach Anspruch 2 oder 3, dadurch gekennzeichnet, daß die Nut (35) vom Nutengrund ausgehende, schräg auseinanderlaufende Begrenzungswände (37) aufweist, die bis zur vorderen Öffnung der Nut (25) durchlaufen.

5. Verschraubung nach einem der Ansprüche 1 bis 4, dadurch gekennzeichnet, daß die Stirnfläche (39) des unteren Bundteiles (35) eine nach vorn hin offene Ausnehmung (4o) aufweist.

6. Verschraubung nach Anspruch 5, dadurch gekennzeichnet, daß die Ausnehmung (4o) im unteren Bundteil (35) als konzentrisch zum Durchgang (27) des hohlzylindrischen Zwischenstutzens (1o) angeordnete kreisringförmige Vertiefung der Stirn- bzw. Dichtfläche (39) ausgebildet ist.

7. Verschraubung nach Anspruch 6, dadurch gekennzeichnet, daß die kreisringförmige Vertiefung (4o) nur einen Teilbereich der Stirn- bzw. Dichtfläche (39) einnimmt und daß sich an diese Vertiefung (4o) ein vorspringender ebener Außenbereich (45) anschließt.

8. Verschraubung nach Anspruch 1, dadurch gekennzeichnet, daß die Dicke des oberen Bundteiles (33) ein Mehrfaches der Dicke des unteren Bundteiles (34) beträgt.

9. Verschraubung nach Anspruch 1, dadurch gekennzeichnet, daß jede Zunge (17) des Zwischenstutzens (1o) einen Klemmbereich (19) aufweist, daß die Klemmbereiche (19) der Zungen (17) des Zwischenstutzens (1o) an dieser einseitig in die gleiche Richtung zeigend angeordnet sind und daß jede Zunge (17) in ihrer Ruhelage mit ihrem Klemmbereich (19) die jeweils benachbarte Zunge (17) wenigstens bereichsweise überlappt.

## Claims

1. Plastic screwing for inserting and transition, sealing and strain relief of cables, wires, or hoses, consisting of an intermediate sleeve (10), with associated sealing element (11) made of a rubber-elastic material and a cap nut resp. a pressure screw (12); the hollow-cylinder intermediate sleeve (10) on one end featuring latches (17) separated from each other by slits (18), which press the sealing element (12) against the circumferential surface of the introduced cable, etc. upon turning of the cap nut, and a thread (13) for the cap nut (12) being joined to the ends of the latches (17); and on the other end featuring an exterior thread (14) for screwing into a counterthread of a wall (41) and featuring a collar (15) between the thread (13) for the cap nut (12) and the exterior thread (14) for attaching the intermediate sleeve (10) to the wall (41), one face of which will be placed against the adjacent surface of the wall (41),
characterized by
the collar (15) of the intermediate sleeve (10) consisting of a dimensionally stable upper collar part (33) and a sectionally elastic lower collar part (34), the face of which (39) will directly press against the adjacent surface (44) of the wall (41) in a sealing capacity.

2. Screwing pursuant to claim 1, characterized by a preferably continuous groove (35) between the upper collar element (33) and the lower collar element (34).

3. Screwing pursuant to claim 1, characterized by the groove (35) tapering off into a rounded groove floor (36).

4. Screwing pursuant to claim 2 or 3, characterized by the groove (35) featuring diverging walls (37) running the entire length of the groove with the narrower section at the groove base and the wider section at the outer opening of the groove (25).

5. Screwing pursuant to one of the claims 1 to 4, characterized by the face (39) of the lower collar element (35) featuring a recess (40) open to the front.

6. Screwing pursuant to claim 5, characterized by the recess (40) in the lower collar element (35) being shaped as circular ring-shaped groove in the face resp. sealing surface (39) in concentric arrangement to the passage (27) of the hollow-cylinder intermediate sleeve (10).

7. Screwing pursuant to claim 6, characterized by the circular ring-shaped groove (40) occupying only a section of the face resp. sealing surface (39) and by a protruding even exterior rim (45) joining to this groove (40).

8. Screwing pursuant to claim 1, characterized by the thickness of the upper collar element (33) being a multiple of the thickness of the lower collar element (34).

9. Screwing pursuant to claim 1, characterized by each latch (17) of the intermediate sleeve (10) featuring a clamping section (19); by the clamping sections (19) of the latches (17) of the intermediate sleeve (10) being positioned on one side of these facing the same direction, and by each latch (17) in its neutral position at least sectionally overlapping the respective neighboring latch (17) with its clamping sector (19).

## Revendications

1. Raccord à vis en matière plastique, pour l'entrée et la traversée et la reprise de la traction de câbles, de conduites ou de tubes flexibles, constitué d'une tubulure intermédiaire (10) avec un corps d'étanchéité (11) associé, réalisé en un matériau ayant l'élasticité du caoutchouc, et un écrou, ou une vis de pression (12), la tubulure intermédiaire (10) cylindrique creuse présentant à une extrémité des languettes (17) séparées les unes des autres, par des fentes (18), qui, lors de l'actionnement de l'écrou à chapeau, pressent le corps d'étanchéité (12) contre la face périphérique du câble introduit ou analogue, et le filetage de réception (13) destiné à l'écrou à chapeau (12) se raccordant aux extrémités des languettes (17) et qui présente à l'autre extrémité un filetage extérieur (14) destiné au vissage dans un filetage conjugué d'une paroi (41) et où, entre le filetage de réception (13) destiné à l'écrou à chapeau (12) et le filet extérieur (14) destiné au montage de la tubulure intermédiaire (10) sur le mur (41), est disposée une collerette (15) dont une face frontale appuie sur la surface voisine de la paroi (41), caractérisé en ce que la collerette (15) de la tubulure intermédiaire (10) est constituée d'une partie supérieure (33) de collerette de forme stable et d'une partie inférieure (34) de collerette élastique par zones, et dont la face frontale (39) vient en appui étanche direct sur la surface (44) voisine de la paroi (41).

2. Raccord à vis selon la revendication 1, caractérisé en ce qu'entre la partie supérieure (33) de collerette et la partie inférieure (34) de collerette est disposée une gorge (35), de préférence sur toute la périphérie.

3. Raccord vissé selon la revendication 1, caractérisé en ce que la gorge (35) se développe avec un fond de gorge arrondi (36).

4. Raccord vissé selon la revendication 2 ou 3, caractérisé en ce que la gorge (35) présente des parois de limitation (37) partant du fond de gorge, s'écartant obliquement les unes des autres et allant jusqu'à l'ouverture avant de la gorge (25).

5. Raccord à vis selon l'une des revendications 1 à 4, caractérisé en ce que la face frontale (39) de la partie de collerette inférieure (35) présente un évidement (40) ouvert en direction de l'avant.

6. Raccord à vis selon la revendication 5, caractérisé en ce que l'évidement (40) est réalisé dans la partie de collerette inférieure (35), comme une cavité en forme de bague circulaire, disposée concentriquement par rapport au passage (27) de la tubulure intermédiaire cylindrique creuse (10), de la surface frontale, ou d'étanchéité (39).

7. Raccord à vis selon la revendication 6, caractérisé en ce que la cavité (40) en forme de bague circulaire ne couvre qu'une zone partielle de la surface frontale ou d'étanchéité (39) et se raccorde à une zone extérieure plane en faisant saillie (45).

8. Raccord à vis selon la revendication 1, caractérisé en ce que l'épaisseur de la partie supérieure de collerette (33) est un multiple de l'épaisseur de la partie inférieure (34) de collerette.

9. Raccord à vis selon la revendication 1, caractérisé en ce que chaque languette (17) de la tubulure intermédiaire (10) présente une zone de serrage (19), en ce que les zones de serrage (19) des languettes (17) de la tubulure intermédiaire (10) sont disposées d'an côté sur celles-ci, en étant orientées vers la même direction, et en ce que chaque languette (17) chevauche au moins partiellement dans sa position de repos, par sa zone de serrage (19), la languette (17) correspondante voisine.
